# EUROPEAN PATENT APPLICATION

(11) **EP 1 130 817 A2**
(43) Date of publication of application: **05.09.2001**
(21) Application number: 01300510.3
(22) Date of filing: 22.01.2001
(51) Int. Cl.: H04B 10/155

(54) **Optical modulator including a self optimized RF input driver**

(30) Priority: 03.02.2000 US 498376
(71) Applicant: Agere Systems Optoelectronics Guardian Corporation, Orlando, Florida 32819-8698 (US)
(72) Inventor: Mizuhara, Osamu, Allentown, Pennsylvania 18104 (US); Yeates, Paul David, Alburtis, Pennsylvania 18011 (US)
(74) Representative: Perkins, Sarah

(57) **Abstract**

An optical modulator includes a feedback circuit for optimizing the amplitude of the gain in the RF driver associated with the input data signal. A low amplitude, low frequency dither signal is incorporated with the input signal and appears as an envelope on the data signal. When the RF amplifier has the proper drive amplitude, the dither signal will not appear on the optical output. In the case where the RF amplifier is either underdriven (low amplitude) or overdriven (high amplitude), the dither signal will appear as an envelope on the optical output signal. A portion of the optical output is tapped off and used as an input to a feedback circuit that compares the recovered dither signal to the input reference dither signal. In particular, the amplitude and phase of the recovered dither signal is then compared with that of the input reference dither signal and used to adjust the gain applied to the RF amplifier until the dither signal disappears from the output signal.

## Description

### Background Of The Invention

The present invention relates to an optical modulator and, more particularly, to a feedback control arrangement for maintaining an optimum RF drive input level to the optical modulator.

### Description Of The Prior Art

Modulation methods for optical devices such as lasers generally fall into two categories: (1) direction modulation, where the bias current applied to the laser itself is modulated by an electrical data signal; or (2) indirect (external) modulation, where the bias current to the laser is held constant, and the constant light output from the laser is modulated by the electrical data signal to provide the lightwave output data signal. Direct modulation appears to be best-suited for short-haul applications using data rates up to 10GB/s. For other applications, such as optical LANS and other long-haul systems, external modulation is preferred.

A common arrangement for providing external modulation of an optical signal is to utilize an optical interferometer, such as a Mach-Zehnder interferometer. The constant optical output from the laser is coupled into the optical input waveguide of the interferometer. The electrical data signal is applied to the electrical inputs of the interferometer such that the optical output replicates the data pattern of the electrical input. Specifically, the optical input signal is split between two waveguide paths formed in a bulk optical material, such as lithium niobate. The applied electrical data signal is coupled to electrodes formed on the bulk material surface. The data signal on the electrodes varies the electric field in the vicinity of the waveguides supporting the optical signal. The presence of the electric field modifies the optical path length of each waveguide, resulting in a phase difference between the optical signals traveling along the two waveguide paths. By proper control of the phase difference, the two optical signals may exit the interferometer either completely in phase (indicating a logic "1", for example), or out of phase (indicating a logic "0", for example).

In theory, external modulation appears to provide the ideal solution to the frequency chirping problem associated with direction modulation. However, long-term stability of interferometers is questionable. The characteristics of such an interferometer, in particular its transfer function (i.e., optical output as a function of applied voltage) is known to drift as a function of time, temperature, and various other parameters. Any drift in transfer curve necessarily moves the bias point voltage and results in introducing error into the output optical data signal. Other environmental factors have been known to affect the drive circuitry used to applied the input electrical data signal to the interferometer.

One prior art technique for improving the performance of an external optical modulator is discussed in U.S. Patent 5,208,817 issued to M-L Kao et al. on May 4, 1993, entitled "Modulator-Based Lightwave Transmitter". The disclosed transmitter includes an "automatic bias control" (ABC) circuit that is used to supply both the DC bias voltage and a dither signal to a Mach-Zehnder external modulator. A detection arrangement included in the ABC circuit is used to compare the phase of the dither signal to the phase of an electrical output signal (generated from the optical output signal), using the phase difference to control the level of the applied DC bias voltage.

While the Kao et al. arrangement is useful in terms of correcting the DC bias voltage, any variations in the amplitude of the input data signal (the RF input) will still result in generating errors in the optical output signal.

Thus, a need remains in the art for self-correcting the amplitude of the RF drive signal in an optical modulator arrangement.

### Summary Of The Invention

The present invention relates to an optical modulator and, more particularly, to a feedback control arrangement for maintaining an optimum RF drive input level to the optical modulator.

In accordance with the present invention, a low frequency, low amplitude dither signal is imparted onto the electrical data signal (RF signal) applied as the drive input, through an amplifier, to the optical modulator. When the RF drive signal is optimized, the dither signal will appear as a "null signal" and not impact the optical output signal from the modulator. When the RF drive signal is too low (that is, when the optical input is "underdriven") or too high ("overdriven"), the dither signal amplitude will envelope the optical output signal (being 180° out of phase with the original dither signal for the overdriven case). Therefore, by studying the amplitude and phase of the recovered dither signal, appropriate corrections for the RF drive signal can be ascertained. A feedback loop is used to recover both the dither amplitude and phase to form an RF drive error correction signal, and feed this back to the RF drive circuit to control the amplitude of the RF drive signal.

In one embodiment of the present invention, the feedback loop may comprise an analog circuit. Alternatively, a digital controller or digital signal processor (DSP) may be used. In the case of a digital controller, the input signals require preconditioning (by bandpass or notch filters) to isolate the dither signal for processing.

Other and further features of the present invention will become apparent during the course of the following discussion and by reference to the accompanying drawings.

### Brief Description Of The Drawings

Referring now to the drawings,
FIG. 1 illustrates an exemplary prior art optical modulator;
FIG. 2 illustrates an exemplary optical modulator including an dither circuit for self-optimizing the RF drive input in accordance with the present invention;
FIG. 3 contains a graph of the optical modulator transfer function, also illustrating the presence of the dither signal as an envelope for the high speed data signal;
FIG. 4 illustrates the optical output (including dither signal) for the "underdriven" case;
FIG. 5 illustrates the optical "eye diagram" output for the underdriven case;
FIG. 6 contains a diagram comparing the recovered dither signal to the input reference dither signal for the underdriven case;
FIG. 7 illustrates the optical output (including dither signal) for the "overdriven" case;
FIG. 8 illustrates the optical "eye diagram" for the overdriven case;
FIG. 9 contains a diagram comparing the recovered dither signal to the input reference dither signal for the overdriven case;
FIG. 10 illustrates the optical output (including dither signal) for an optimized RF drive signal amplitude;
FIG. 11 illustrates the optical "eye diagram" for the optimum RF amplitude level case; and
FIG. 12 contains a diagram comparing the essentially flat recovered dither signal to the input reference dither signal for the optimal RF drive case.

### Detailed Description

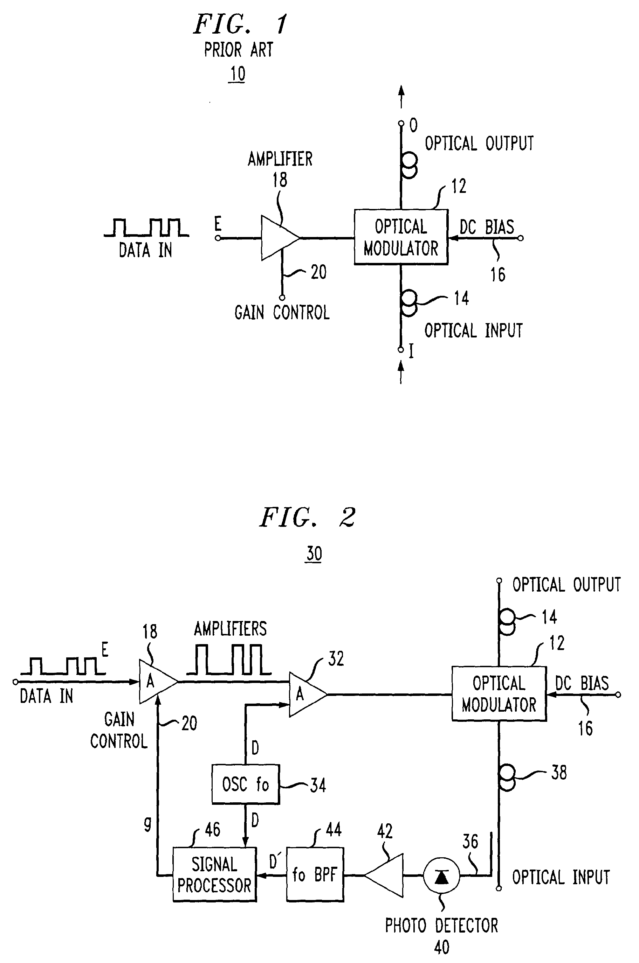

In order to better understand the operation of the self-optimized RF drive input for an optical modulator as formed in accordance with the present invention, it is useful review the operation of a conventional optical modulator. An exemplary prior art optical modulator 10 is illustrated in FIG. 1 and comprises a bulk optic device 12, such as a Mach-Zehnder interferometer. As described below, interferometer 12 receives as inputs a DC optical signal I and an electrical data signal E, where the data is used to modulate the optical signal and thus provide as an output an optical data signal O. Referring to FIG. 1, the input optical signal is coupled into interferometer 12 via a waveguide 14 (which may be a fiber, a waveguide formed on the surface of the bulk optic device, or a combination of both). As is well-known in the art, included within interferometer 12 are a pair of optical waveguides and associated electrodes formed on the surface thereof (not shown). Upon the application of an electrical signal to the electrodes, the waveguiding properties within interferometer 12 will change, thus affecting the optical output signal. In particular, by controlling an applied electrical DC bias signal 16, the optical output signal can be made to track the shape of the input electrical data signal, providing an essentially error-free optical re-creation of the 1's and 0's in the electrical input data signal.

As shown in FIG. 1, electrical data signal E first passes through an RF amplifier 18 and is then applied as an input to interferometer 12. In this conventional prior art arrangement, a gain control input 20 to RF amplifier 18 is adjusted during an initial testing phase to provide for optimum performance of the device. That is, the initial amplifier gain is set so that the input data signal is neither overdriven nor underdriven.

A problem remains with this prior art arrangement in that there is no means for maintaining the amplifier gain at the proper level over time. In particular, environmental changes, drive signal changes, aging of the amplifier, etc., all contribute to causing the gain to "drift". This drift then results in skewing the optical output so as to blur the thresholds between the "1" and "0" and introduce errors in the output data stream.

FIG. 2 illustrates a self-optimized optical modulator 30 of the present invention that addresses this remaining problem by including a dither signal and feedback loop between the optical output and the RF amplifier. Components that are essentially identical to those of the prior art arrangement include the same reference numeral as the arrangement in FIG. 1. Referring to FIG. 2, input electrical data signal E first passes through amplifier 18, with the gain applied (as before) through gain input 20 to amplifier 18. In accordance with the present invention, the amplified electrical signal is then applied as an input to a second amplifier 32, where a low frequency, low amplifier dither signal D from an oscillator 34 is applied as a second input to second amplifier 32, thus forming as an output an amplified data signal including a dither signal envelope. As before, this electrical signal is applied as an input to interferometer 12, which is DC-biased so as to provide an optical output signal O that replicates the data pattern present in electrical data input signal E.

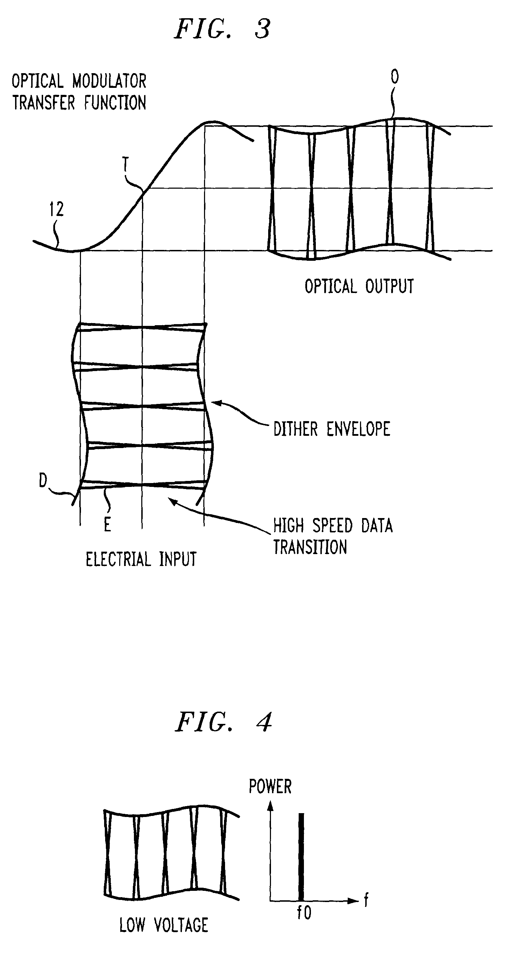

The RF gain control in the present invention is achieved by incorporating an optical tap arrangement 36 in the output waveguide 38 from interferometer 12. As shown, a low bandwidth photodiode 40 is used to capture a portion of the optical output signal and convert it into an electrical representation, which is thereafter passed through an amplifier 42 and filtered in a bandpass filter 44 to remove the data portion of the output signal and recover the dither signal (envelope), denoted D' in FIG. 2. Recovered dither signal D' and the original reference dither signal D are then applied as inputs to a comparator circuit 46 which functions to compare the amplitude, frequency and phase of recovered signal D' with respect to the original reference dither signal D. As will be discussed in detail below in association with FIGs. 3-12, the differences between these signals is then used to determine a gain correction to applied to the gain signal 20 input of RF drive amplifier 18. Comparator circuit 46 may comprise a simple analog circuit capable of performing the comparison, a digital controller or, alternatively, a digital signal process(DSP). In the case of a digital controller, a bandpass and/or notch filter is required at the input to isolate the dither portion of the output signal for processing. By using DSPs, the preconditioning filters can be replaced by Fast Fourier Transforms (FFTs) and digital filters, all realizable in software.

FIG. 3 illustrates the application of the optical modulator transfer function between the (dithered) electrical input signal and the optical output signal. Referring to FIG. 3, the electrical input is shown in the bottom portion of the diagram, with a low amplitude, low frequency dither signal D illustrated as creating the envelope for the high speed data signal E. Transfer function T for interferometer 12 is illustrated as a gradual sinusoidal shape, transitioning between the extremes for a logic "0" and a logic "1", with the center of the transfer function coinciding with the threshold between the logic levels. Optical output O is thus of the form illustrated in FIG. 3, where the optical output maintains the envelope associated with the dither signal.

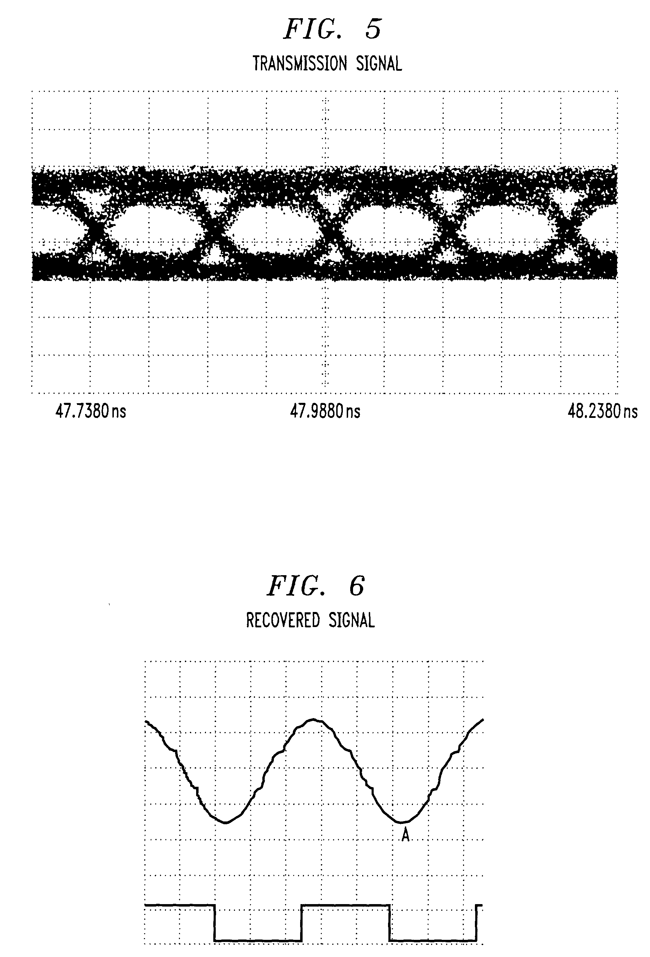

In the situation where the RF drive is less than the optimum level (the "underdriven" case), the dither signal amplitude on the optical output will be large and the recovered dither signal D' will be in phase with the original reference dither signal D. FIG. 4 illustrates this underdriven situation, illustrating the optical output signal O and power available at the dither frequency f₀. The optical "eye diagram" associated with the underdriven case is shown in FIG. 5, which clearly depicts a relatively "closed" eye, where this closure will result in introducing errors into the decisions between a logic "0" and logic "1" in the output signal. A comparison between the input reference dither signal D and recovered dither signal D' is shown in FIG. 6, illustrating the recovered signal D' as being relatively large in amplitude and in phase with input reference dither signal D. Comparator circuit 46 of modulator 30 (as shown in FIG. 2) will then use this information ("large" amplitude; in-phase recovered dither signal) to determine that RF amplifier 18 is in the underdriven state and will therefore increase the gain g applied to amplifier 18 until the optimum drive signal amplitude is obtained ("zero" amplitude recovered dither signal).

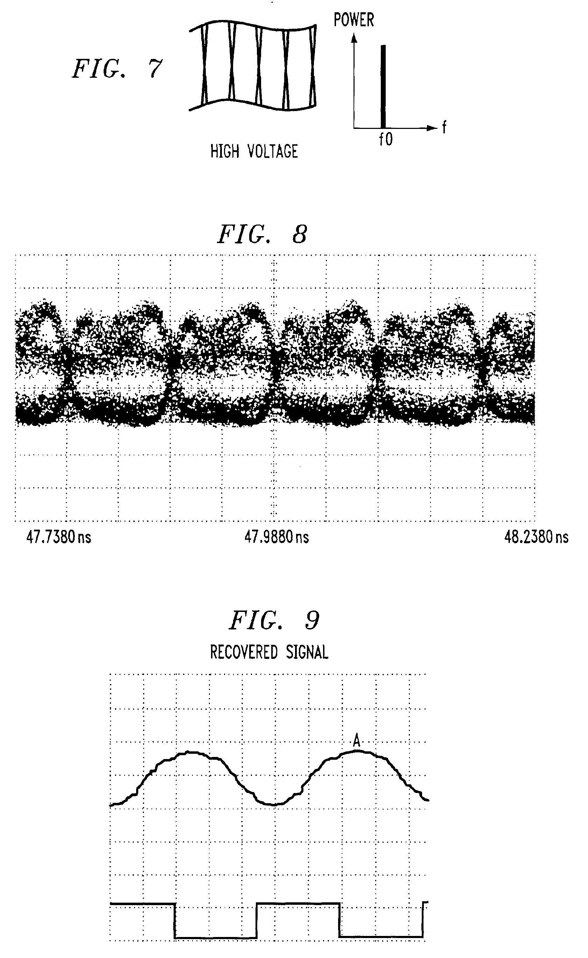

FIG. 7 illustrates the optical output signal when the gain of RF amplifier 18 is too high (that is, the amplifier is overdriven). As with the underdriven case, the amplitude of the dither envelope on the optical output is rather large. In contrast, however, overdriving amplifier 18 results in the output dither signal being 180° out of phase with the input reference dither signal. The optical "eye diagram" for the overdriven case is shown in FIG. 8, which clearly illustrates the overshoot of the output signal beyond the desired decision threshold, as well as a relatively closed eye (resulting in threshold decision errors between the logic "0" and logic "1" states). FIG. 9 is a comparison of the recovered signal D' to the input reference dither D. The 180° phase shift between the two signals is apparent in this diagram. Comparator circuit 46 uses this information (large dither amplitude, 180° phase difference) to ascertain that RF amplifier 18 is overdriving the input data signal E and therefore decreases the gain signal g applied to amplifier 18 until the optimal drive state is reached.

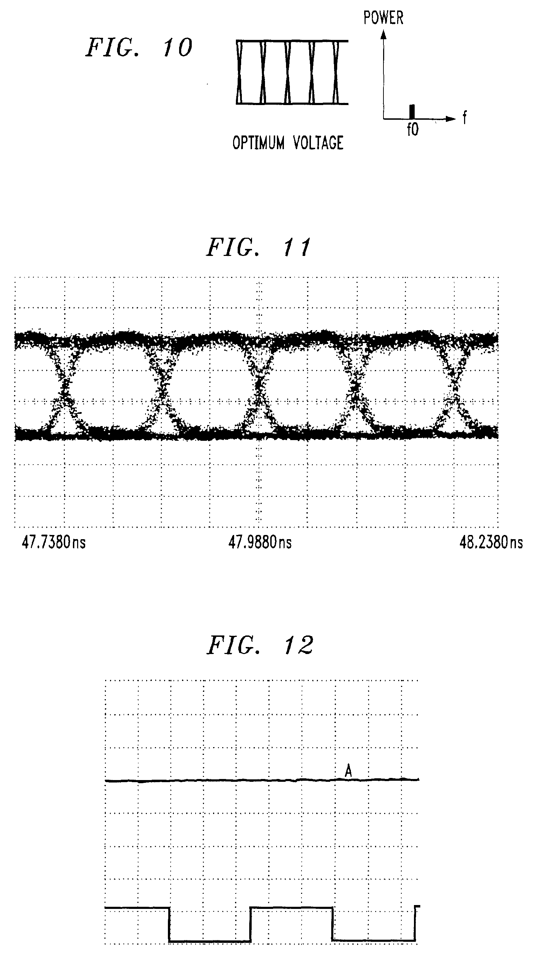

The "optimum" situation for RF amplifier 18 is illustrated by FIGs. 10-12. FIG. 10 illustrates optical output signal O in the case where the gain applied to RF amplifier 18 is at the proper level (that is, amplifier 18 is neither underdriven nor overdriven). As shown, there is no discernible envelope present on the output signal, since the amplitude of the RF amplifier, combined with the applied dither, will precisely track the modulator transfer function. The optical "eye diagram" for this case is shown in FIG. 11 and is an extremely open eye, allowing for accurate threshold decisions to be made between the logic "0" and logic "1" levels. FIG. 12 illustrates both recovered dither signal D' and input reference dither signal D, clearly indicating the lack of any discernible dither signal on the output.

As mentioned above, various environmental changes to modulator 30 will result in transfer function T of interferometer 12 and/or the characteristics of RF amplifier 18 changing over time. Accordingly, the presence of the RF amplifier feedback arrangement of the present invention will quickly realize when the RF drive amplitude has shifted from the optimum value to either underdriven or overdrive the amplifier and apply the needed correction to the gain applied to amplifier 18. Thus, the feedback arrangement of the present invention is self-optimizing in that as the amplifier conditions drift away from optimal (i.e., as the amplifier becomes either underdriven or overdriven), comparator circuit 46 will recognize the changes in the recovered dither signal amplitude and phase characteristics and adjust the RF amplifier gain signal accordingly.

## Claims

1. An externally modulated optical transmitter comprising
a transmitting optical device biased to produce an essentially constant optical output signal;
an RF amplifier arrangement responsive to an electrical data signal, a gain control signal, and an input reference dither signal at a predetermined frequency f₀ for generating an amplified electrical data signal having an envelope corresponding to the input reference dither signal;
an optical interferometer responsive to the essentially constant optical output signal, the amplified electrical data signal and a DC electrical bias signal for generating an optical output signal replicating the electrical data signal; and
an RF amplifier gain feedback circuit coupled between the optical interferometer output and the RF amplifier gain control input for recovering the dither signal present in the optical output signal and comparing the recovered dither signal to the input reference dither and adjusting the gain applied to the RF amplifier based on the phase of the recovered dither signal compared to the phase of the input reference dither signal.

2. An externally modulated optical transmitter as defined in claim 1 wherein the input reference dither signal is a low frequency, low amplitude signal.

3. An externally modulated optical transmitter as defined in claim 1 wherein the RF amplifier feedback circuit increases the gain applied to the RF amplifier when the recovered dither signal is in phase with the input reference dither signal.

4. An externally modulated optical transmitter as defined in claim 1 wherein the RF amplifier feedback circuit decreases the gain applied to the RF amplifier when the recovered dither signal is 180° out of phase with the input reference dither signal.

5. An externally modulated optical transmitter as defined in claim 1 wherein the RF amplifier comprises
a first amplifier stage for receiving as separate inputs the electrical data signal and the gain signal for generating as an output an amplified electrical data signal;
an oscillator for generating an input reference dither signal at a predetermined frequency f₀; and
a second amplifier stage for receiving as separate inputs the amplified electrical data signal and the input reference dither signal, and generating as an output the dithered, amplified electrical data signal subsequently applied as an input to the interferometer.

6. An externally modulated optical transmitter as defined in claim 1 wherein the RF amplifier gain feedback circuit comprises
an optical tap for removing a predetermined portion of the optical output signal;
a photodetector for converting the tapped optical output signal into an electrical representation thereof;
a filter for removing the output data signal from the electrical representation of the optical output signal and recovering the dither signal; and
a comparator circuit responsive to both the recovered dither signal and the input reference dither signal for generating a gain correction signal based on the difference in phase between the recovered dither signal and the input reference dither signal.

7. An externally modulated optical transmitter as defined in claim 6 wherein the comparator circuit increases the gain applied to the RF amplifier when the recovered dither signal is in phase with the input reference dither signal.

8. An externally modulated optical transmitter as defined in claim 6 wherein the comparator circuit decreases the gain applied to the RF amplifier when the recovered dither signal is 180° out of phase with the input reference dither signal.

9. An externally modulated optical transmitter as defined in claim 6 wherein the comparator circuit comprises an analog circuit.

10. An externally modulated optical transmitter as defined in claim 6 wherein the comparator circuit comprises a digital controller circuit.

11. An externally modulated optical transmitter as defined in claim 6 wherein the comparator circuit comprises a digital signal processor circuit.
